(19) Europäisches Patentamt
European Patent Office
Office européen des brevets

(11) Veröffentlichungsnummer: **0 431 410 A1**

(12) **EUROPÄISCHE PATENTANMELDUNG**

(21) Anmeldenummer: **90122362.8**

(51) Int. Cl.[5]: **C08K 3/08**, C08L 81/02

(22) Anmeldetag: **23.11.90**

(30) Priorität: **05.12.89 DE 3940122**

(43) Veröffentlichungstag der Anmeldung:
**12.06.91 Patentblatt 91/24**

(84) Benannte Vertragsstaaten:
**BE DE FR GB IT**

(71) Anmelder: **BAYER AG**

**W-5090 Leverkusen 1 Bayerwerk(DE)**

(72) Erfinder: **Sirinyan, Kirkor, Dr.**
**Humperdinckstrasse 12**
**W-5060 Bergisch Gladbach(DE)**
Erfinder: **Köhler, Burkhard, Dr.**
**Mündelheimer Strasse 94**
**W-4150 Krefeld 11(DE)**
Erfinder: **Sommer, Alexa, Dr.**
**Morgengraben 3**
**W-5000 Köln 80(DE)**
Erfinder: **Sommer, Klaus, Dr.**
**Morgengraben 3**
**W-5000 Köln 80(DE)**

(54) **Polyarylensulfide mit verringerter Radikalbildung und ihre Verwendung zur Herstellung geformter Körper.**

(57) Die Erfindung betrifft Mischungen aus Polyarylensulfiden (PAS), vorzugsweise Polyphenylensulfiden (PPS) und aktivierten Metallen und ihre Verwendung zur Herstellung geformter Körper. Die Mischungen zeigen eine verringerte Radikalbildung, z.B. unter Bestrahlung mit Tageslicht und UV-Licht unter atmosphärischen Bedingungen. Sie eignen sich bevorzugt zur Herstellung von Fasern.

EP 0 431 410 A1

# POLYARYLENSULFIDE MIT VERRINGERTER RADIKALBILDUNG UND IHRE VERWENDUNG ZUR HERSTELLUNG GEFORMTER KÖRPER

Die Erfindung betrifft Mischungen aus Polyarylensulfiden (PAS), vorzugsweise Polyphenylensulfiden (PPS) und aktivierten Metallen und ihre Verwendung zur Herstellung geformter Körper. Die Mischungen zeigen eine verringerte Radikalbildung, z.B. unter Bestrahlung mit Tageslicht und UV-Licht unter atmosphärischen Bedingungen. Sie eignen sich bevorzugt zur Herstellung von Fasern.

Polyarylensulfide und ihre Herstellung sind bekannt (z.B. US-A 3 354 129, EP-A 171 021). Polyarylensulfidharze sind in ihrer Wärmebeständigkeit, Lösungmsittelstabilität, Flammwidrigkeit und anderen Eigenschaften vielen Thermoplasten überlogen. Nachteilig kann jedoch ihre mangelnde Beständigkeit gegenüber UV-Strahlung, insbesondere in Gegenwart von Sauerstoff sein (Ultrakurzbewitterung). Daher sind Formteile, Folien und

Fasern aus PPS z.B. für Einsatzzwecke unter atmosphärischen Bedingungen (UV-Strahlung, $O_2$) nur bedingt geeignet.

Es ist bekannt, daß PAS, wie andere Kunststoffe auch, mit Ruß stabilisiert werden kann (z.B. JP-A 100 139). Die mechanischen Eigenschaften dieser Mischungen werden durch die Rußmengen beeinflußt. Die Herstellung von Fasern aus rußhaltigem PAS ist schwierig.

Aus der DE-A 3 617 138 ist bekannt, PAS durch Zusatz von Kupfer-(I)-halogeniden zu stabilisieren. Nickelkomplexe mit schwefelhaltigen Liganden sind aus der US-A 4 130 081 als Stabilisatoren für PPS bekannt.

Diese Additive ermöglichen jedoch kaum Schutz gegen radikalische Schädigung, z.B. bei UV-Bestrahlung des Polymeren (z-B. Tageslicht).

Ein direktes Maß für Bindungsbrüche durch UV-Belastung ist die Messung der Radikalkonzentration unter Bestrahlung. Nach dieser Meßmethode wurde mit Tetramethylpiperidinen (z.B. US-A 4 370 430) als PPS-Stabilisatoren keine Verringerung der Radikalbildungsgeschwindigkeit beobachtet.

Ein Abbau der Polymermoleküle im PAS kann z.B. durch Messung der Vergilbung verfolgt werden. Hierbei wird das Remissionsspektrum mit einer Kugelgeometrie (d/8, mit Glanz) im Wellenbereich zwischen 400 und 700 nm gemessen. Als integraler Wert für die Vergilbung der Probe wird der Yellowness-Index bestimmt.

Es wurde nun gefunden, daß Mischungen aus Polyarylensulfiden, vorzugsweise Polyphenylensulfiden, bestimmten schwefelfreien Übergangsmetallkomplexen und bestimmten schwefelhaltigen Substanzen eine deutlich verringerte Radikalbildungsgeschwindigkeit und Vergilbung aufweisen als unstabilisierte oder nach dem Stand der Technik ausgerüstete Produkte.

Gegenstand der Erfindung sind daher Mischungen, enthaltend

A) 99,9-90 Gew.-% Polyarylensulfide, vorzugsweise Polyphenylensulfid,

B) 0,1-10 Gew.-% aktivierte Metalle.

Erfindungsgemaß werden aktivierte Metalle durch Reduktion der jeweiligen Metallkomplexe der Formel (I) oder (II), vorzugsweise der Formel (I),

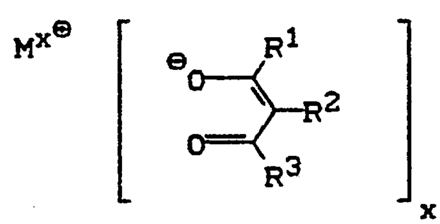

(I),

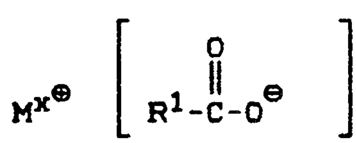

(II),

jwobei

| | |
|---|---|
| M | ein Metall, vorzugsweise der 7., 8. oder 9 Nebengruppe (des Periodensystems der Elemente nach Mendelejew, Hollemann, Wiberg, Lehrbuch der anorganischen Chemie, Walter de Gruyter & Co, Berlin 1964), besonders bevorzugt Kupfer, Eisen, Kobalt, Nickel oder Mangan, ganz besonders bevorzugt Kupfer ist, |
| $R_1$, $R_2$ and $R_3$ | unabhängig voneinander Wasserstoff, $C_1$-$C_{22}$-Alkyl, vorzugsweise Methyl, $C_7$-$C_{22}$-Aryl-Alkyl, vorzugsweise Benzyl, oder $C_6$-$C_{14}$-Aryl, vorzugsweise Phenyl, bedeuten |

und

X für 1, 2 oder 3 steht,

mit Boran oder Borankomplexen, vorzugsweise den Dialkylaminoboran-Komplexen oder Hydrazin oder Natriumboranat oder Wasserstoff bei erhöhten Temperaturen und Drücken hergestellt.

Erfindungsgemaß einsetzbare Polyarylensulfide, vorzugsweise Polyphenylensulfid sind bekannt (z.B. EP-A 171 021, US-A 3 354 129) und handelsüblich (z.B. Tedur®, Ryton®). Sie können linear, verzweigt und/oder vernetzt sein.

Die Herstellung erfindungsgemäß verwendbarer aktivierter Metalle erfolgt nach bekannten Methoden bei Temperaturen von 150-250 °C bei Drucken von 0,1-10 bar, gegebenenfalls unter Inertgas (z.B. $N_2$).

Die erfindungsgemäßen Mischungen können 0,01-400 Gew.-%, vorzugsweise 5-100 Gew.%, bezogen auf die Summe der Komponenten (A + B), übliche Zusatzstoffe wie Fasern, Glasfasern, anorganische Füllstoffe, z.B. Zinkoxid, Titanoxid, Magnesiumcarbonate, Talkum, Calciumcarbonat, Calciumsulfat, übliche Pigmente, organische Hilfsstoffe, wie z.B. Bismaleinimide von Diaminen, usw. enthalten.

Die erfindungsgemäßen Mischungen zeigen gegenüber unstabilisierten Polyarylensulfiden den Vorteil, daß sie bei Bestrahlung mit Licht (z.B. langwelliges UV-Licht ab 305 m) eine geringere Radikalbildungsgeschwindigkeit (gemessen durch ESR bei -110 °C) haben.

Ein weiterer Gegenstand der Erfindung ist die Verwendung der Mischung zur Herstellung von geformten Körpern, vorzugsweise Fasern.

Beispiele

Vergleichsbeispiel 1

Man stellt einen Schmelzkörper aus 10 g Poly-p-phenylensulfid mit einer Schmelzviskosität von 44 Pa (306 °C, 1,000 $s^{-1}$) her. Man schabt mit einem Korundschaber PPS-Flocken von diesem Schmelzkörper ab und füllt sie in ein ESR-Röhrchen (Durchmesser 3 mm). Man bestrahlt unter Luft bei -110 °C mit einer 500 W-Hg-Lampe, deren kurzwelliger Anteil (( 305 nm) herausgefiltert wurde. Die niedrige Temperatur verhindert die Weiterreakion der durch die Bestrahlung erzeugten Radikale.

Die Differenz der in 60 Minuten minus der in 30 Minuten gebildeten Radikale wird als MaB für die Radikalbildungsgeschwindigkeit gewählt. Differenz: 182 (Relativzahlen).

Die Zunahme des Yellowness-Index eines 40 Gew.-% Glasfasern enthaltenden Compounds bei 35-stündiger Bewitterung beträgt 30.

Vergleichsbeispiel 2

Man stellt einen Schmelzkörper aus 10 g PPS und 0,5 g Kupferpulver her und verfährt wie oben beschrieben. Differenz: 60.

Beispiel 1

527 g Cu(II)-acetylacetonat werden in 2500 ml $H_2O$ destilliert aufgeschlämmt. Der Lösung werden unter $N_2$ 80 g DMAB (Dimethylaminboran) in 3.00 ml $H_2O$ destilliert bei 60 °C im Verlaufe von 2h zugetropft und weitere 2h bei 60 °C nachgerührt. Anschließend wird der Niederschlag bei Raumtemperatur abgesaugt und dreimal mit 300 ml $H_2O$ destilliert, zweimal mit 100 ml Ethanol und einmal mit 100 ml Chloroform gewaschen. Nach Trocknen unter Vakuum erhält man ein aktiviertes Cu mit großer geometrischer Oberfläche (5 $m^2$/g).

Beispiel 2

Man stellte einen Schmelzkörper aus 10 g PPS und 0,5 g des aktivierten Kupfers aus Beispiel 1 her und verfuhr wie in den Vergleichsbeispielen beschrieben. Differenz: 0.

Die Zunahme des Yellowness-Index einer Mischung aus 59 Gew.-% PPS, 1 Gew.-% des aktivierten Kupfers aus Beispiel 1 und 40 Gew.-% Glasfaser beträgt 9.

## Ansprüche

1. Mischungen, enthaltend
   A) 99,9-90 Gew.-% Polyarylensulfide,

B) 0,1-10 Gew.-% aktivierte Metalle.

2. Mischungen nach Anspruch 1, dadurch gekennzeichnet daß die aktivierten Metalle durch Reduktion der jeweiligen Metallkomplexe der Formel (I) oder (II),

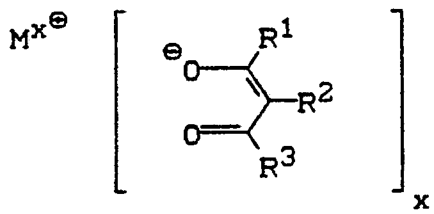

I,

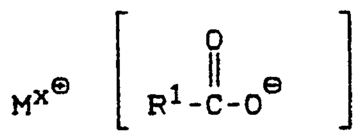

II,

wobei

| | |
|---|---|
| M | ein Metall der 7., 8. oder 9. Nebengruppe ist. |
| $R_1$, $R_2$ und $R_3$ | unabhängig voneinander Wasserstoff, $C_1$-$C_{22}$-Alkyl, $C_7$-$C_{22}$-Aryl-Alkyl, oder $C_6$-$C_{14}$-Aryl, bedeuten und |
| x | für 1, 2 oder 3 steht, |

mit Boran und/oder Borankomplexen und/oder Hydrazin und/oder Wasserstoff hergestellt werden,

3. Verwendung von Mischungen nach Anspruch 1 zur Herstellung geformter Körper.

Europäisches Patentamt

# EUROPÄISCHER RECHERCHENBERICHT

Nummer der Anmeldung

EP 90 12 2362

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 326 888 (BAYER AG)<br>* Ansprüche; Beispiele 9,10,12 *<br>- - - - - | 1-3 | C 08<br>K 3/08<br>C 08 L 81/02 |

| RECHERCHIERTE SACHGEBIETE (Int. Cl.5) |
|---|
| C 08 K<br>C 08 L |

Der vorliegende Recherchenbericht wurde für alle Patentansprüche erstellt

| Recherchenort | Abschlußdatum der Recherche | Prüfer |
|---|---|---|
| Den Haag | 08 März 91 | HOFFMANN K.W. |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument